# EUROPÄISCHE PATENTSCHRIFT

(11) **EP 1 712 122 B1**
(45) Veröffentlichungstag und Bekanntmachung des Hinweises auf die Patenterteilung: **10.12.2008**
(21) Anmeldenummer: 06004340.3
(22) Anmeldetag: 03.03.2006
(51) Int. Cl.: A01D 75/28

(54) **Antriebssystem für eine Erntegutfördereinrichtung**
Drive system for an apparatus for conveying crop
Système d'entraînement pour un appareil pour convoyer des récoltes

(30) Priorität: 12.04.2005 DE 102005016950
(43) Veröffentlichungstag der Anmeldung: 18.10.2006
(73) Patentinhaber: CLAAS Selbstfahrende Erntemaschinen GmbH, 33428 Harsewinkel (DE)
(72) Erfinder: Wamhof, Heiner, 49186 Bad Iburg (DE); Hellenbrand, Ferdinand, 94136 Thyrnau (DE)

(56) Entgegenhaltungen:
- EP-A- 1 595 435
- DE-A1- 2 749 592
- DE-A1- 3 332 763
- DE-C1- 19 908 696

## Beschreibung

Die vorlegende Erfindung- bezieht sich allgemein auf das Gebiet der Verarbeitung von Ernteerzeugnissen. Hierzu werden selbstfahrende Landmaschinen, welche zur Aufnahme der Ernte und zur Verarbeitung des Gutes, beispielsweise Mais oder unterschiedlichen Getreidesorten, eingesetzt. Bei den selbstfahrenden Landmaschinen handelt es sich in der Regel um Dreschmaschinen, insbesondere Mähdrescher, die mit Einrichtungen zur Verarbeitung des Emtegutes ausgestattet sind. Zur Verarbeitung des Erntegutes, welches aus einem Gemisch von Kommaterial und Nichtkomanteilen besteht, werden beispielsweise Einrichtungen zum Trennen der unterschiedlichen Bestandteile des Erntegutes eingesetzt. So eine Einrichtung ist beispielsweise die Emtegutfördereinrichtung, bestehend aus einer Gebläsevorrichtung, einer Fördervorrichtung, einer Rücklaufvorrichtung, einer Reinigungsvorrichtung mit einem Obersieb und einem im Siebkasten angeordneten Untersieb, wobei die Emtegutfördereinrichtung über eine Antriebseinheit verfügt.

Bei einem derartigen Mähdrescher wird das geemtete Gut über die Zuführvorrichtung der Drescheinrichtung zugeführt, in der das Gemisch abgeschieden wird. Das ausgedroschene Stroh wird dann über einen Hordenschüttler mit mehreren Steilstufen dem rückwärtigen Ende des Mähdreschers zugeführt. Das durch den Dreschvorgang im Bereich der Dreschtrommel und der davor angeordneten Beschleunigungstrommel aus dem Erntegut gelöste Gemisch von Kornanteilen und Nichtkomanteilen, beispielsweise Kömer, sowie Spreu und nicht ausgedroschen Ähren, gelangt durch die Kornabscheidevorrichtung zum Vorbereitungsboden, von dem aus das Gemisch der Reinigungsvorrichtung zugeführt wird, die üblicherweise aus mehreren Sieben besteht, wobei das Obersieb und der Siebkasten mit dem darin angeordneten Untersieb beweglich gelagert ist.
Die der Dreschtrommel nachgeschalteten. über Kurbelwellen in Schwingung versetzte Horden des Schüttiers lösen mit dem Multifinger - Separator System, einem dem Dreschsystem effizient nachgeschalteten Restkornabscheidungssystem ein weiteres Gemisch, ebenfalls bestehend aus einem Komanteil und Nichtkornanteilen, aus dem Erntegut aus. Das ausgelöste Gemisch wird über die beweglich gelagerte Rücklaufvorrichtung, bestehend aus dem Rücklaufboden und dessen Antrieb, ebenfalls der Reinigungsvorrichtung zugeführt.
Beide Gemische aus der Kornabscheidevorrichtung und dem Hordenschüttler gelangen somit über die zuständigen Böden auf das Obersieb. Durch das Obersieb gelangt das Erntegut zum darunter liegenden Untersieb und wird, nachdem es das Untersieb passiert hat, über einen Förderer, beispielsweise Schneckenförderer zum Ernteguttank transportiert.
Vor der Reinigungsvorrichtung, die durch eine geeignete Schütteleinrichtung in Oszillation versetzt wird, ist üblicherweise eine Gebläsevorrichtung, mit mehreren Luftkanälen angeordnet, um das Korn-Spreu-Gemisch und sonstige Verunreinigungen voneinander zu trennen, bevor die Spreu und der Kurzstrohantell über das hintere Ende der Siebe hinaus ausgeblasen oder ausgeworfen wird.
D.h., das Gemisch wird auf seinem Weg von seiner Kornabscheidevorrichtung über den Förderboden, bzw. vom Hordenschüttier über den Rücklaufboden bis hin zur Förderschnecke mehrfach separiert, um das Korn von den Nichtkombestandteilen zu trennen. Die Trennung des Gemisches erfolgt dabei durch zwei verschiedene Methoden. Einerseits wird die durch das Turbinengebläse erzeugte Druckluft durch die beiden übereinander angeordneten Siebe geführt.
Die beiden Siebe stellen somit eine doppelt belüftete Fallstufe für das Erntegut dar, wodurch eine intensive zweistufige Vorreinigung erfolgt. Die zweistufige Vorreinigung bewirkt, dass die leichten, aus Nichtkornbestandteilen bestehenden Teile durch den Druckwind über die Siebe geblasen und entsorgt werden. Ein Luftkanal führt den vom Turbinengebläse erzeugten Luftstrom unter das Untersieb, der nächste Luftkanal den Luftstrom unter das Obersieb, wie zuvor beschrieben, und ein weiterer angeordneter Luftkanal den Luftstrom zwischen dem Siebkasten bzw. dem Obersieb und dem Förderboden und Rücklaufboden zur Separation des Gemisches hindurch, wodurch eine erste Trennung aus Korn und Nichtkomanteilen und eine Enttastung des Obersiebes erfolgt.
Zur Erhöhung der Reinigungswirkung bzw. der Trennung des Gemisches wird andererseits die Emtegutfördereinrichtung bzw. deren einzelne Vorrichtungen, wie beispielsweise der Förderboden, der Rücklaufboden, das Obersieb und der mit einem Untersieb ausgestattete Siebkasten in Schwingung versetzt. Die in Schwingung versetzten Vorrichtungen haben auf das Bewegungsverhalten des zu reinigenden bzw. des zu trennenden Gemisches Einfluss.

Die Vorrichtungen sind dazu beweglich gelagert und werden alle über den gleichen Exenterantrieb verbunden, durch ein mechanisches Getriebe, wie aus dem Stand der Technik der DE 33 32 763 C 2 bekannt, angetrieben bzw. in Schwingung versetzt.

Nachteil dieser Reinigungsvorrichtung ist, dass diese nicht den unterschiedlichen Emtebedingungen angepasst werden kann und für alle zu verarbeitenden Emteerzeugnisse nur ein gleichbleibender Luftstrom und eine gleichbleibende Schwingungsfrequenz für die einzelnen Komponenten der Emtegutfördereinrichtung zum Transport und zur Separation von Körnern und Nichtkomanteilen zur Verfügung steht.

Der Nachteil des gleichbleibenden Luftstromes für die Reinigungsvorrichtung wurde durch das in der DE 198 07 145 C2 beschriebene Steuer- und Regelsystem für das Gebläse, zur besseren Trennung der Körner und Nichtkörneranteile, behoben. Der zuvor beschriebene Nachteil des Antriebes, der für die Oszillation der Emtegutfördereinrichtung zuständig ist, besteht hier weiterhin.
Der Nachteil der einachsigen Schwingung der Reinigungsvorrichtung, bzw. deren einzelner Vorrichtungen in Förderrichtung, soll durch eine zusätzliche Schwingung in der Siebebene der Reinigungseinrichtung ergänzt werden und somit eine Verbesserung des Trennprozesses der Körner und Nichtkörneranteile bewirken. Dazu ist gemäß der DE 199 08 696 C1 ein weiterer Schwingantrieb vorgesehen, der durch ein mechanisches Koppelsystem die Reinigungseinrichtung zusätzlich anregt. Der herkömmliche Schwingungsantrieb kann auch über ein zusätzlich angeordnetes Winkelgetriebe eine zusätzliche Schwingung der Reinigungseinrichtung, die quer zur Förderrichtung des Emtegutes verläuft, erzeugen. Nachteilig ist auch hier, dass die Schwingungsfrequenz der Reinigungseinrichtung in Förderrichtung des Erntegutes konstant und nicht variabel ist und eine Anpassung an die unterschiedlichen Erntebedingungen nicht erfolgen kann.

Der Erfindung liegt daher die Aufgabe zugrunde, ein Antriebssystem für eine Erntegutfördereinrichtung der eingangs genannten Art zu schaffen, welche die vorgenannten Nachteile des bekannten Standes der Technik vermeidet und eine technische Lösung anzugeben, die es ermöglicht, eine mit einfacher Funktionsgeometrie angetriebene Erntegutfördereinrichtung herzustellen.

Erfindungsgemäß wird dieses Problem durch die kennzeichnenden Merkmale des Patentanspruchs 1 gelöst. Vorteilhafte Ausgestaltungen und Weiterbildungen der Erfindung ergeben sich aus den nachstehenden Unteransprüchen und den nachfolgenden Beschreibungen

Grundsätzlich ist die Erntegutfördereinrichtung zur Separation des Erntegutes in einer selbstfahrenden Landmaschine ein komplexes und technologisch weit entwickeltes Aggregat. Das von verschiedenen Vorrichtungen der Reinigungsvorrichtung über schwingungsangeregte Böden zugeführte Emtegut wird ebenfalls auf schwingungsangeregten Sieberf, die zur intensiven Auflockerung der Gemische mit Luft durchströmt werden, um eine verbesserte Kömerabscheidung zu erzielen, weiter separiert. Damit eine gute Körnerabscheidung auch noch beim Hangdrusch gewährleistet ist, ist die Reinigungsvorrichtung derart gestaltet, dass die Reinigungsvorrichtung automatisch der Hangneigung nachgeführt wird oder in einer anderen Ausführungsform wird das Reinigungsgemisch auf dem Obersieb durch eine quer zum Obersieb verlaufenden Schwingungsantrieb wieder gleichmäßig verteilt. Des weiteren ist die Reinigungsvorrichtung mit Sensoren ausgestattet, die es in einem Regel- und Steuerkreis ermöglichen, beispielsweise das Gemisch in der Überkehr zu kontrollieren und aufgrund des Messergebnisses die Ober- und Untersiebweite, sowie die Durchströmung der Luft in der Reinigungsvorrichtung, zu verändern. Die einachsige Schwingungsanregung der Emtegutfördereinrichtung zum Transport des Gemisches ist bei allen eingesetzten Vorrichtungen konstant, weil für alle Vorrichtungen nur ein Antrieb zur Verfügung steht.

Aufgrund der Anforderungen, möglichst schonend geerntete und marktfertig gereinigte Früchte vom Feld zu erhalten und bei der Weiterverarbeitung der Früchte Kosten zu reduzieren, wird erfindungsgemäß vorgeschlagen, ein neuartiges Antriebssystem zur Verbesserung der Abscheidewirkung für die Reinigungsvorrichtung in Mähdreschern zu schaffen.

Die Aufgabe an die Emtegutfördereinrichtung besteht bei der Verarbeitung des Emtegutes darin, den Trennprozess zu verbessern, d.h. den Anteil der sauberen Früchte zu erhöhen und die Fremdanteile zu reduzieren. Zur Reduzierung der Fremdanteile im Emtegut wird erfindungsgemäß vorgeschlagen, die Erntegutfördereinrichtungen, bzw. deren einzelne Vorrichtungen, wie Förder- und Rücklaufboden, Ober- und Untersieb mit einem eigenem Antrieb auszustatten und somit die jeweilige Vorrichtung unabhängig voneinander in eine präzise, an die jeweiligen Emtebedingungen angepasste Schwingung anzuregen. Die Schwingungsanregung beeinflusst das Bewegungsverhalten des zu reinigenden Gemisches auf den jeweiligen Böden und jeweiligen Sieben der Emtegutfördereinrichtung im Mähdrescher. Das Bewegungsverhalten des Emtegutes sollte in Förderrichtung durch. Gleit- und Wurfphasen geprägt sein. Zur Beeinflussung dieser Gleit- und Wurfphasen wird erfindungsgemäß vorgeschlagen, um optimale Transport- und Trennbedingungen des Gemisches zu erreichen, die einzelnen Vorrichtungen mit mehreren Antrieben auszustatten, die so angeordnet sind, dass eine Schwingungsanregung in mehreren Freiheitsgraden ermöglicht wird. Aufgrund der Freiheitsgrade ergeben sich resultierende Bewegungsanregungen in den Raumkoordinaten X, Y, Z in horizontaler-, vertikaler- und Kreisbewegungsrichtung Prinzipiell sind alle Bewegungsrichtungen realisierbar, beispielsweise einseitige, zweiseitige, parallele und Bewegungsanregungen in horizontale und / oder vertikale Richtung, wie auch beliebige Kombinationen davon sind denkbar. Damit wird für eine Vorrichtung der Erntegutfördereinrichtung eine variable Bewegung in drei Ebenen erreicht.

Zur Erzeugung der variablen Bewegung einer Vorrichtung wird erfindungsgemäß vorgeschlagen, linear oszillierende Schwingungseinheiten einzusetzen. Die linear oszillierenden Schwingungseinheiten können als elektrische, hydraulische oder elektromagneüsche Schwingungsantriebe ausgeführt sein. Linear oszillierende Schwingungseinheiten zeichnen sich durch höchste Dynamik, große Beschleunigungskapazität, hohe Endgeschwindigkeit und exzellente statische und dynamische Laststeifigkert aus. Durch die kompakte Bauweise und dadurch bedingt geringen Platzbedarf, sowie der hohen Zuverlässigkeit und Lebensdauer, sind diese Schwingungsantriebe bestens geeignet, den mechanischen Kurbelantrieb mit Kopplungsgestänge und Winkelgetriebe zu ersetzen.
Der weitere und entscheidende Vorteil dieser erfindungsgemäßen Ausführung ist, dass die Schwingungseinheiten mit einer individuellen Frequenz, einem individuellen Hub und einer individuellen Kraft betrieben werden können.
Dieses sei anhand eines Ausführungsbeispiels näher erläutert. Stellvertretend für alle schwingungsmäßig anzutreibenden Vorrichtungen in der Erntegutfördereinrichtung sei hier das neue Antriebssystem installiert an der Vorrichtung des Obersiebes beschrieben, um die vielfältigen Möglichkeiten des Reinigungsprozesses durch Schwingungsanregung des Obersiebes in einem Mähdrescher darzustellen. Beispielsweise sind drei Schwingungseinheiten an der Vorrichtung des Obersiebes angeordnet, wobei jeder Schwingungseinheit ein Koordinate X, Y und Z zugeordnet ist. Für die Koordinaten der Bewegungsrichtung X, Y befinden sich die Schwingungseinheiten parallel und zur Bewegungsrichtung Z senkrecht zur Fläche des Obersiebes, wodurch die Krafteinleitung ebenfalls parallel und senkrecht zur angeregten Fläche erfolgt, wobei die Koordinate der X- Richtung der Bewegungsrichtung des Erntegutes in Förderrichtung, die Koordinate der Y-Richtung der Bewegungsrichtung des Emtegutes quer zur Förderrichtung und die Koordinate der Z- Richtung der Bewegungsrichtung des Erntegutes in vertikaler Richtung entspricht. Werden nur die beiden in Richtung der X- und Z-Achse angeordneten Schwingungseinheiten gleichzeitig betrieben, ergeben sich durch die Überlagerung der beiden Frequenzen in erster Näherung eine sinusförmige Schwingungsform die für den Transport des Emtegutes auf dem Obersieb sorgt. Das Bewegungsverhalten des Emtegutes auf dem Obersieb der Reinigungsvorrichtung entspricht der Ausbildung von Gleit- und Wurfphasen. Die Gleitphase wird durch die Schwingungseinheit zuständig für die Bewegungsrichtung X und die Wurfphase durch die zuständige Schwingungseinheit der Bewegungsrichtung Z gekennzeichnet. Das ist insofern relevant, da optimale Trennbedingungen des Gemisches vorliegen, wenn sowohl eine schichtartige Schwingbewegung der einzelnen Schichten des zu reinigenden Gemisches während der Gleitphase, als auch eine hohe Wurfauflockerung in der Wurfphase auftreten.
Die weitere Aufgabe, die dieser Erfindung zugrunde liegt, besteht darin, die Gleit- und Wurfphasen einzeln zu variieren, um auf die unterschiedlichen Emtebedingungen und unterschiedlichen Emtegüte besser eingehen zu können, die durch die heutigen modernen Ackerbaumethoden entstehen. Im modernen Ackerbau ist beispielsweise das zu erntende Stroh noch grün, feucht und zäh, wodurch trotz APS-Dreschsystem mit den Körnern Fremdpartikel aus der Kornabscheidevorrichtung auf den Förderboden gelangen. Dieses Gemisch aus Körnern und Nichtkörneranteilen gilt es in optimalen Gleit- und Wurfphasen dem Obersieb der Reinigungsvorrichtung zuzuführen. Die nach dem Dreschsystem im Stroh verbliebenen Restkörner werden auf den nachfolgenden Hordenschüttler mit dem effektiven MSS-System, einer Trommel mit gesteuerten Zinken, abgeschieden. Auch hier fallen Körner und Fremdpartikel aufgrund der schwierigen Emtebedingungen wie z.B. feuchtes Stroh und/oder Grünwuchs mit aus. Dieses Gemisch gelangt auf den Rücklaufboden und wird ebenfalls über Gleit- und Wurfphasen dem Obersieb zugeführt- Das Gemisch aus der Kornabscheidevorrichtung des Dreschsystems und das Gemisch aus der Kornabscheidevorrichtung des Hordenschüttlers unterscheidet sich in der Zusammensetzung der Körnern und Nichtkömeranteilen. D.h., das Gemisch "A" aus dem Dreschsystem hat einen anderen bzw. höheren Kömeranteil und einen geringeren Anteil an Fremdpartikeln als das Gemisch "B" aus dem Schüttler. Daher ist es naheliegend, den Förderboden mit dem darauf befindlichen Gemisch "A" zur Optimierung der Gleit- und Wurfphase mit einer anderen Schwingung zu betreiben als den Rücklaufboden mit dem Gemisch "B" . Noch extremer wird die Situation für das Gemisch "C", indem die Beimengungen, wie Strohstücke, Spreu und Ährenteile aus dem Gemisch "A" und "B" bereits reduziert wurden. Die Reduzierung der Beimengen erfolgte in der ersten Fallstufe, in der das von den Böden kommende Gemisch "A" und "B" mit einem von dem Reinigungsgebläse erzeugten Luftstrom durchsetzt wird und anschließend auf das Obersieb fällt. Das Gemisch "C" auf dem Obersieb unterscheidet daher von den Gemischen "A" und "B" der vorhergehenden Vorrichtungen dadurch, dass mengenmäßig betrachtet die Nichikornanteile im Emtegut weiter reduziert wurden und die Komanteile zugenommen haben. Dieses spezielle Gemisch bedarf zu einer weiteren Reinigung eine intensive Auflockerung und Durchströmung des relativ sauberen Reingutes. Die Durchströmung des Reingutes erfolgt durch ein von unten nach hinten geleiteten Luftstrom, der die noch im Reinigungsgemisch enthaltenen Fremdpartikel ausbläst. Wohingegen die intensive Auflockerung der spezifischen schweren Körner durch das durch Schwingung angeregte Obersieb erfolgt. Zur Einstellung der optimalen Schwingung des Obersiebes bzw. die Einstellung der optimalen Gleit- und Wurfphase für das zu reinigende Gemisch auf dem Obersieb wird das in der Überkehr befindliche Erntegut in seinen Bestandteilen durch eine am oberen Ende des Überkehrelevators angeordnete Überkehrmesseinrichtung durch Sensoren automatisch kontrolliert. Die Daten der Sensoren werden einer Rechnereinheit zugeführt und mit den in einer Datenbank hinterlegten Daten verglichen, wobei die Daten verschiedene Emtebedingungen und verschiedene Erntegüter berücksichtigen, die zur Ermittlung der Einstellparameter für die an der Erntegutfördereinrichtung, in diesem Fall des Obersiebes angeordneten Schwingungseinheiten verwendet. Weicht der festgestellte Istwert vom hinterlegten Sollwert ab, wird der jeweilige Einstellparameter für die zuständige Schwingungseinheit ausgewählt und über die Steuereinheit eingestellt, der beispielsweise zur geringsten überkehrmenge geführt hat. Andere Parameter aus der Messung können bei der Bewertung der Einstellparameter berücksichtigt werden. Je nachdem, welcher Einstellparameter betroffen ist, kann die in X-Richtung, die in Y-Richtung oder die in Z- Richtung angeordnete Schwingungseinheit über die Steuereinheit automatisch angesprochen werden, wobei jede Schwingungseinheit durch die erfindungsgemäße Trennung der bisher gekoppelten Parameter der Frequenz und des Hubes wiederum zwei Einstellmöglichkeiten besitzt. Die erste Einstellmöglichkeit zur Änderung der Gleit- und Wurfphase besteht darin, die Frequenz bzw. das Pulspausen- Verhältnis zu verändern. Diese Veränderung hat überwiegend Einfluss auf die Wurfphase des Emtegutes. Bei der zweiten Einstellmöglichkeit wird der Hub, bzw. der Weg der oszillierenden Schwingung bestimmt. Die Veränderung hat überwiegend Einfluss auf die Gleitphasen des Emtegutes. Der maximale Hub der Schwingeinheit ergibt sich bei der einfachen Spule mit Eisenkern und Magnet aus der Hälfte des Abstandes zwischen den durch Wechselstrom erzeugten Nord- und Südpol. Der Hub kann mehrere Zentimeter oder nur wenige zehntel Millimeter betragen. Um das in Schwingung versetzte, beispielsweise Obersieb mit der darauf befindlichen Masse des Emtegutes im Extremfall schnell abbremsen zu können, wird erfindungsgemäß vorgeschlagen, eine Wirbelstrombremse am Obersieb einzusetzen. Bei einer anderen Ausführung von Schwingungseinheit, bestehend aus einer Linearführung, Linearmotor und Mittel zur Befestigung, kann die Lineareinheit ebenfalls mit einer änderbaren Frequenz und/ oder Hub über eine digitale Servorregelung beaufschlagt werden. Mit der Änderung der Frequenz und des Hubes steht jeder einzelnen Schwingungseinheit eine individuelle Einstellung der Parameter für die Gleit- und Wurfphase des zu reinigenden Gemisches zur Verfügung. In Sondersituationen kann eine Änderung der Einstellparameter für die Schwingungseinheiten manuell durch den Bediener, durch abschalten der Automatik im elektronischen Bedienerterminal erfolgen. Dem Bediener des Mähdreschers steht dann ein Bedienfeld zur Verfügung, indem die Parameter der Frequenz und des Hubes aufgrund des sehr guten Regelungsverhaltens jeder einzelnen Schwingungseinheit individuell geändert werden können. Die Anzeige der manuell eingestellten Werte erfolgt über den Monitor und kann mit den Werten der Arbeitsergebnisse verglichen werden. Die Teilchen des Reinigungsgemisches lassen sich somit in alle Richtungen auf dem Obersieb bewegen. Damit wird dem Bediener ein Mittel an die Hand gegeben, welches ihm die Möglichkeit einräumt gegenüber den voreingestellten Parametern eine an die Arbeitssituation angepasste Einstellung vorzunehmen.
Weitere Vorteile, die sich aus der individuellen Einstellung der Schwingungseinheiten ergeben, sind, dass eine sogenannte Teppichbildung des Reinigungsgemisches beispielsweise auf dem Obersieb vermieden und eine höhere Arbeitsleistung bei verbesserter Abscheidewirkung erzielt wird und gleichzeitig eine Reduzierung des Erntegutverlustes erfolgt.
Mit einer derartigen Ausgestaltung von Antriebssystemen lässt sich einfach und schnell die Emtegutfördereinrichtung erstens an die unterschiedlichen bearbeitbaren Erntegüter bzw. Emtguteigenschaften zur Erzielung eines guten Arbeitsergebnisses, beispielsweise beim Feld- und Fruchtwechsel, anpassen und zweitens einfach und schnell dabei auf die unterschiedlich anfallenden Emtebedingungen durch Einstellung der optimalen Parameter für das zu separierende Erntegut, wodurch eine Erhöhung des Emtegutanteils erzielt wird, reagieren.
Des weiteren steht beispielsweise mit dem quer zur Förderrichtung des zu reinigenden Emtegutes angeordneten Schwingungseinheit ein linear oszillierender Antrieb zur Verfügung, mit dem auch beim seitlichen Hangdrusch das Erntegut weiterhin auf dem Obersieb, selbst bei vollem Durchsatz, gleichmäßig verteilt werden kann und ein hangabwärtiges Rutschen des Reinigungsgemisches verhindert wird. Der Transport des Emtegutes auch bei Neigung der Böden und Siebe hervorgerufen durch Änderung der Bod enkontur in Fahrrichtung des Mähdreschers, kann durch die Änderung der Frequenz und/oder des Hubes, der an den Böden und Sieben angeordneten linear oszillierenden Schwingungseinheiten, sicher gestellt werden. Die Antriebsparameter der oszillierenden linearen Schwingungseinheiten können also in Abhängigkeit von der Neigung des Mähdreschers, sowie in Abhängigkeit von den Reinigungsverlusten, der Reinigung oder durch eine vorgewählte oder manuelle Einstellung geregelt werden.
In einer weiteren vorteilhaften Ausgestaltung der Erfindung kann durch die senkrecht zum Obersieb angeordneten Lineareinheiten die Lage der Böden und Siebe gegenüber der Hangneigung durch den Verfahrweg der Lineareinheiten ausgeglichen werden.

Nicht nur das Obersieb, sondern alle Vorrichtungen der Erntegutfördereinrichtung können mit dem neuartigen Anfiiebssystem, wie zuvor beschrieben, ausgestattet werden. Dazu können die Förderelemente, wie Förder- und Rücklaufboden und die Reinigungselemente, wie Ober- und Untersieb mit Federn, Gas- oder Öldruckdämpfern, Kugelgelenkstangen oder über elektrische bzw. hydraulische oder elektromagnetische verstellbare Lineareinheiten im Maschinengehäuse elastisch aufgehängt sein.

Ein Ausführungsbeispiel der Erfindung ist in den Zeichnungen rein schematisch dargestellt und wird nachfolgend näher beschrieben. Es zeigt
- Figur 1: eine schematisierte Seitenansicht einer selbstfahrenden Landmaschine,
- Figur 2: einen erfindungsgemäßen Aufbau mit mehreren linear oszillierenden Schwingungseinheüen an einem frei schwingenden Obersieb angeordnet,
- Figur 3: ein erfindungsgemäßes Antriebssystem mit mehreren linear oszillierenden Schwingungseinheiten bestehend aus einem Linearmotor mit linearer Führung angeordnet an einem Obersieb ,
- Figur 4: den erfindungsgemäßen Aufbau für die Steuerung der linear oszillierenden Schwingungseinheiten.

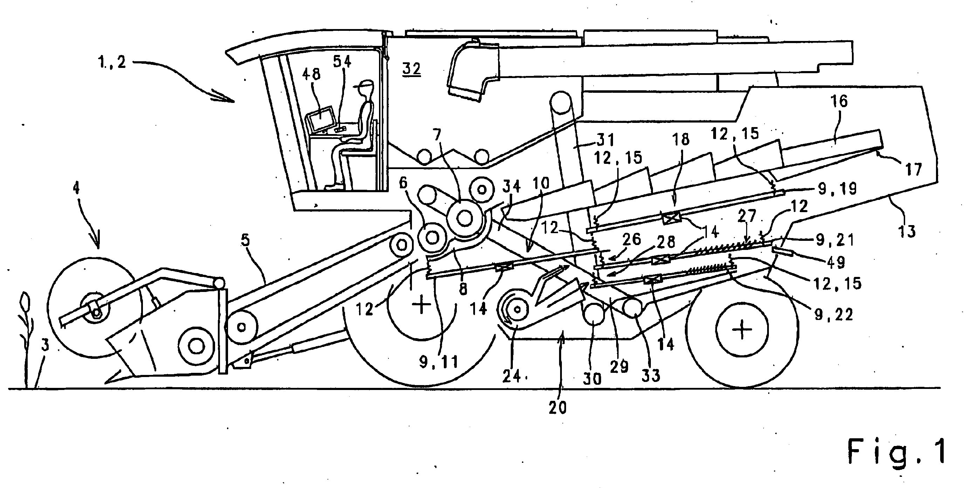

In Fig.1 wird eine schematisierte Seitenansicht eines Mähdreschers 2 gezeigt, wobei der Mähdrescher 2 ein Verfahren und eine Vorrichtung umfassf, die zum Antreiben einer Erntegutfördereinrichtung 9, die im wesentlichen aus mindestens einem Boden 11 und zumindest einem Sieb 21, wobei der Boden 11 und das Sieb 21 jeweils einzeln im Maschinengehäuse 13 pendelnd aufgehängt sind und einer schwingungserzeugenden Antriebseinheit 14 besteht, und wobei die Antriebseinheit 14 aus einer linear oszillierenden Schwingungseinheit 14 gebildet und über eine Frequenz- und/oder Hubänderung gesteuert wird.

Aufgabe eines Mähdreschers 2 ist es, das Emtegut von einer Feldfläche 3 aufzunehmen, und in Körner und Nichtkornanteile zu trennen. Zur Aufnahme und Weiterverarbeitung des Erntegutes ist ein Schneidwerk 4 und ein Förderer 5 vorgesehen, die das Erntegut der Drescheinrichtung 6,7 zuführen, In der Drescheinrichtung 6,7 erfolgt die erste Separation der Körner von Ähren und Stroh. Die Körner gelangen durch den Dreschkorb 8 auf den Vorbereitungsboden der Erntegutfördereinrichtung 9, wobei die Erntegutfördereinrichtung 9 aus den Böden 11,19 und der Reinigungsvorrichtung 20 besteht. Der Vorbereitungsboden ist erfindungsgemäß eine Fördervorrichtung 10 bestehend aus einem Förderboden 11 der an elastischen Elementen 15 beispielsweise Federn 12 pendelnd im Maschinengehäuse 13 aufgehängt ist und an dem zum Weitertransport des Erntegutes zur Reinigungsvorrichtung 20 mindestens eine linear oszillierende Schwingungseinheit 14 angeordnet ist. Das von der Drescheinrichtung 6,7 abgegebene Stroh wird auf dem nach geschalteten Schüttler 16 einer zweiten Separation unterzogen, wobei die Nichtkombestandteile bzw. das Stroh dem hinteren Ende 17 des Mähdrescher 2 zugeführt wird. Die im Schüttler 16 abgeführten Körner gelangen auf die Rücklaufbodenvorrichtung 18 bestehend aus einem Rücklaufboden 19 der an elastischen Elementen 15 beispielsweise Federn 12 pendelnd im Maschinengehäuse 13 aufgehängt ist und an dem zum Weitertransport des Erntegutes zur Reinigungsvorrichtung 20 mindestens eine linear oszillierende Schwingungseinheit 14 angeordnet ist. Das auf dem Förder- 11 und Rücklaufboden 19 befindliche Erntegut wird durch eine Schwingungsbewegung, hervorgerufen durch die an die an den Böden 11,19 angeordneten linear oszillierenden Schwingungseinheiten 14, der nachfolgenden Reinigungsvorrichtung 20 zugeführt. Die Reinigungsvorrichtung 20 besteht aus einem Obersieb 21, einem in einem Siebkasten 23 (nicht dargestellt) angeordneten Untersieb 22, und einem Reinigungsgebläse 24. Das Ober-21 und das Untersieb 22 sind als Lamellensiebe ausgebildet. Die Übergabe des Erntegutes erfolgt über eine von dem Reinigungsgebläse 24 belüftete Fallstufe 26 auf das Obersieb 21. Durch den Luftstrom in der Fallstufe 26 werden große und leichte Nichtkornanteile bevor sie das Obersieb 21 erreichen, erfasst und am hinteren Ende des Mähdreschers 2 ausgeschieden. Die kleineren und schwereren Erntegutbestandteile fallen auf das Obersieb 21. Ober und Untersieb 21, 22 werden ebenfalls von einem von dem Reinigungsgebläse 24 erzeugten Luftstrom durchsetzt, wobei die Siebe 21,22, ebenfalls wie die Böden 11,19, an Federn 12 pendelnd im Maschinengehäuse 13 aufgehängt und zur Schwingungsbewegung mit mindestens einer linear oszillierenden Schwingungseinheit 14 ausgestattet sind. Die Schwingungsbewegung der Siebe 21,22, sowie der Luftstrom vom Reinigungsgebläse 24 bewirken eine Förderung der Körner und der Nichtkombestandteile zum hinteren Ende des Obersiebes 21 hin. Je nach Einstellung der Obersiebweite 27 fällen die einzelnen Erntegutkömer und weitere Bestandteile des Emtegutes durch das Obersieb 21 der belüfteten Fallstufe II 28 hindurch, wobei wieder leichte Nichtkornbestandteile am hinteren Ende des Untersiebes 22 in die Überkehr 29 abgeschieden werden. Das Untersieb 22 besitzt in der Regel eine feinere Lamellenstruktur als das Obersieb 21 und wird normalerweise mit einer geringeren Öffnungsweite als das Obersieb 21 betrieben. Größere und leichtere Erntegutbestandteile, wie Erntegutkörner mit Spelzen, Ährenteile oder Halmteile werden, sofern sie die erste und zweite Fallstufe 26,28 passiert haben, durch die von den linear oszillierenden Schwingungseinheiten 14 speziell erzeugte Schwingungen des Untersiebs 22 und durch den Luftstrom in die Überkehr 29 transportiert. Das gereinigte Erntegut selbst fällt direkt durch das Untersieb 22 hindurch und wird mittels einer Zuführschnecke 30 und dem Kornelevator 31 in den Korntank 32 befördert. Das in die Überkehr 29 gelangte Emtegut wird mittels einer weiteren Zuführschnecke 33 und dem Überkehrelevator 34 der Drescheinrichtung 6,7, zum erneuten Durchlauf den Arbeitsorganen des Mähdreschers zugeführt.

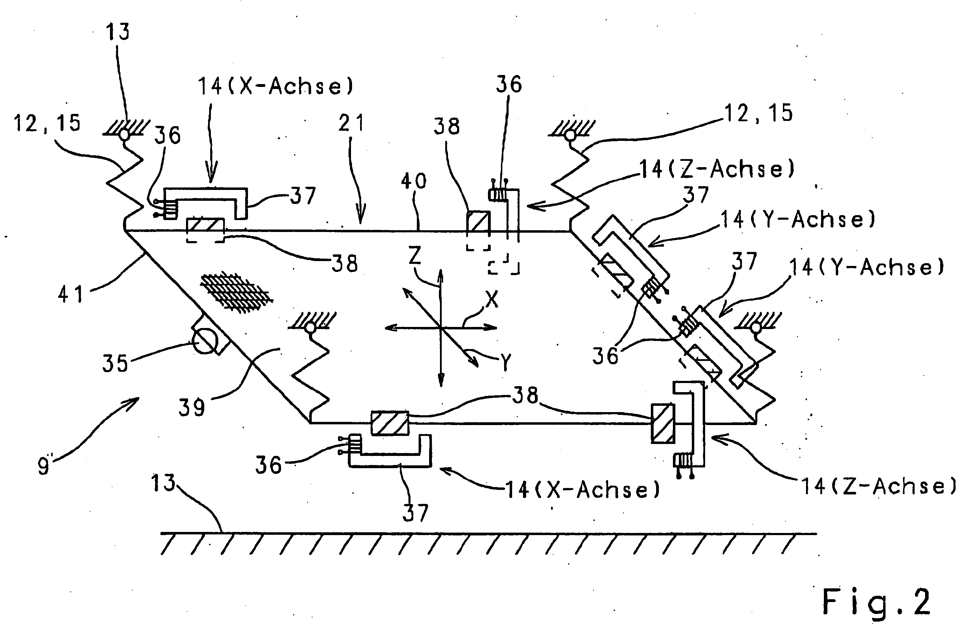

Fig.2 zeigt einen erfindungsgemäßen Aufbau einer Vorrichtung, am Beispiel eines Obersiebes 21, zum Antreiben einer Erntegutfördereinrichtung 9 für selbstfahrende Landmaschinen 1.
Die linear oszillierende Schwingungseinheit 14 wird aus einer Spule 36 mit einem Eisenkern 37 und einem Magnet 38 gebildet, wobei die Spule 36 und der Eisenkern 37 am Maschinengehäuse 13 und der Magnet 38 am Boden 11,19 und /oder am Sieb 21,22 angeordnet ist. Es ist auch denkbar, das die Spule 36 und der Eisenkern 37 am Boden 11,19 und/oder am Sieb 21,22 und der Magnet 38 am Maschinengehäuse 13 angeordnet ist. Der an elastischen Elementen 15 beispielsweise Federn 12 pendelnd aufgehängte Boden 11,19 und/oder das Sieb 21,22 können sich zwischen dem von den linear oszillierenden Schwingungseinheiten 14 erzeugten Magnetfeld frei schwingend bewegen, wobei zur Lagefixierung des Bodens 11,19 und/oder des Siebes 21,22 auch unterhalb des Bodens 11,19 und/oder des Siebes 21,22 federnde Elemente 15 angeordnet sein können. Denkbar sind auch, dass unterhalb und oberhalb des Bodens 11,19 und/oder des Siebes 21,22 federnde Elemente 15 eingesetzt werden. Die lineare Bewegung beispielsweise des Obersiebes 21 in X-Richtung erfolgt durch zwei parallel zur Oberfläche 39 verlaufende und an der Längsseite 40 des Siebes 21 zugeordnete Schwingungseinheiten 14. Die Anordnung der Schwingungseinheiten 14 in der Bewegungsrichtung X bewirken den Transport und stellen die Gleitphase des Erntegutes in Förderrichtung sicher. Die lineare Bewegung des Siebes 21 in Z-Richtung erfolgt durch zwei senkrecht zur Oberfläche 39 verlaufenden und ebenfalls an der Längsseite 40 angeordneten Schwingungseinheiten 14, wobei die Anordnung der Schwingungseinheiten 14 für die Z-Richtung auch an der Querseite 41 des Siebes 21 erfolgen kann. Die Erregung der Siebeinheiten 21, 22 in Bewegungsrichtung Z bewirkt das Auflockern und stellt die Wurfphase des Erntegutes in Förderrichtung sicher. Mit den in Z-Richtung zugeordneten - Schwingungseinheiten 14 kann zudem eine Längsneigung des Siebes 21 beim Hangdrusch ausgeglichen werden. Die lineare Bewegung des Siebes 21 in Y-Richtung erfolgt durch zwei parallel zur Oberfläche 39 und an der Querseite 41 des Siebes 21 zugeordnete Schwingungseinheiten 14. Die Anordnung der Schwingungseinheiten 14 in der Bewegungsrichtung Y nimmt Einfluss auf die Gleit- und Wurfphasen des Emtegutes, die sich durch die linear oszillierenden Schwingungseinheiten 14 in Bewegungsrichtung X und Z ergeben. Die Überlagerung der verschiedenen Schwingungen bewirkt, dass auch bei seitlicher Neigung (Querneigung) des Siebes 21 beim Hangdrusch, die Förderichtung des Erntegutes beibehalten wird. Daraus ergibt sich, wenn mehrere Schwingungseinheiten dem Boden 11,19 und/oder dem Sieb 21,22 zugeordnet sind, dass das Emtegut jede vorbestimmte Förderrichtung auf dem Boden 11,19 und/oder dem Sieb 21,22 einnehmen kann. Eine am Boden 11,19 und/oder am Sieb 21,22 angeordnete Wirbelstrombremse 35 wirkt als Sicherheitselement bei ungewöhnlicher Schwingung die eventuell beim Ernteeinsatz des Mähdreschers 2 entstehen könnte. Dieses Antriebssystem nach Fig. 2 basiert auf einer frei schwingenden Erntegutfördereinrichtung 9.

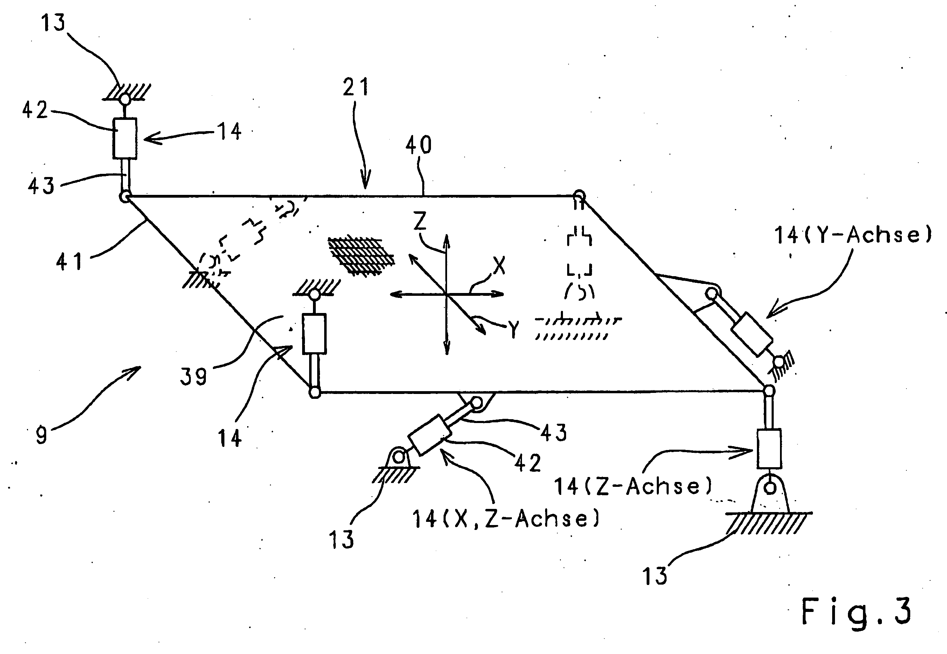

Fig.3 zeigt ein erfindungsgemäßes Antriebssystem mit mehreren an einem Obersieb 21 angeordneten linear oszillierenden Schwingungseinheiten 14 bestehend aus einem Lineamotor 42 mit linearer Führung 43, wobei es sich um eine Vorrichtung nach Anspruch 18 handelt. Der Linearmotor 42 mit der Linearführung 43 kann einzeln oder paarweise parallel zur Oberfläche 39 des Bodens 11,19 und/oder des Siebes 21,22 angeordnet sein. Durch eine paarweise und parallele Anordnung der Schwingungseinheiten zur Oberfläche kann auch eine gegenläufige Schwingungsanregung des Bodens 11,19 und/oder des Siebes 21,22 erzeugt werden, die Einfluss auf die Richtung der Gleitphase des Erntegutes nimmt. Der Linearmotor 42 mit der Linearführung 43 kann auch einzeln oder paarweise senkrecht zur Oberfläche 39 des Bodens 11,19 und/oder des Siebes 21,22 angeordnet sein. Durch - diese Anordnung kann auch eine gegenläufige Schwingungsanregung des Bodens 11,19 und/oder des Siebes 21,22 erfolgen, wobei diese Anordnung Einfluss auf die Richtung der Wurfphase des Erntegutes nimmt. Wird der Linearmotor 42 mit der Linearführung 43 einzeln oder paarweise unter einem Winkel zur Oberfläche 39 des Bodens 11,19 und/oder des Siebes 21,22 angeordnet, erfolgt eine Schwingungsanregung des Bodens 11,19 und/oder des Siebes 21,22 gleichzeitig in Richtung X und Z. Eine derartige Ausführung bewirkt, dass das Erntegut in einer Gleit- und Wurfphase transportiert wird. Dient der Linearmotor 42 mit der Linearführung 43, wie aus Figur 3 ersichtlich, anstelle der elastischen Elemente 15 nach Fig. 3 zur Aufhängung des Bodes 11, 19 und/oder des Siebes 21, 22 kann die Neigung des Mähdreschers 2 beim Hangdrusch, sowohl in Längs- wie auch Querrichtung, durch die Schwingungseinheiten 14 ausgleichen werden. Mit der vorgenannten Antriebsausführung sind sowohl einseitige, zweiseitige, parallele und horizontale Bewegungsanregungen, wie auch beliebige Kombinationen denkbar. Im Prinzip sind auf diese Weise beliebige Bewegungsrichtungen und Kreisbewegungen für die Teilchen des Erntegutes auf dem Boden 11,19 und dem Sieb 21, 22 realisierbar. Das in Figur 3 gezeigte Antriebssystem unterscheidet sich von dem Antriebssystem in Figur 2 dadurch, dass die Schwingungseinheiten 14 nach Figur 3 ein zwischen dem Maschinengehäuse 13 und den Vorrichtungen 10, 18 der Erntegutfördereinrichtung 9 angeordnetes mechanisch gekoppeltes Antriebssystem darstellen.

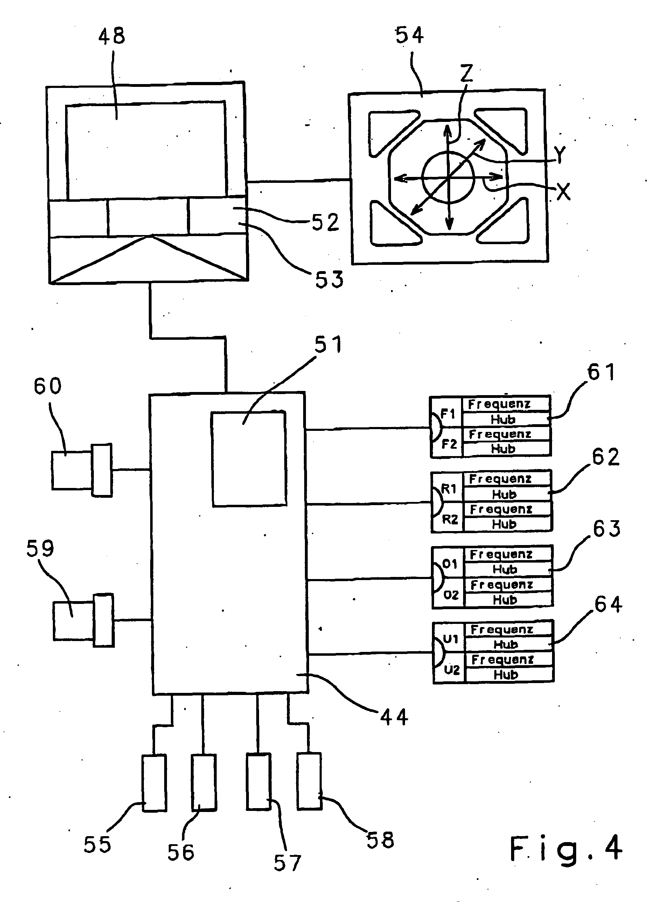

In Fig.4 wird ein Steuerungsverfahren für die Schwingungseinheit 14 anhand einer schematischen Darstellung vorgestellt, welches die Frequenz- und/oder Hubänderung der aus einer linear oszillierenden Antriebseinheit gebildeten Schwingungseinheit 14 über eine Steuereinrichtung 44 realisiert. Die Steuerung der Frequenz F sowie des Hubes H der linear oszillierenden Schwingungseinheit 14 bewirkt eine Änderung der Schwingung der Erntegutfördereinrichtung 9 und somit eine Änderung der Gleit- und Wurfphase des Erntgutes.

Ein gleichzeitiges Steuern der Frequenz F und des Hubes H, der senkrecht und waagerecht, zur Oberfläche 39 der Erntegutfördereinrichtung 9 angeordneten linear oszillierenden Schwingungseinheiten 14, bewirken eine Überlagerung der Schwingungen an der Erntegutfördereinrichtung 9, woraus sich eine andere Gleit-und Wurfphase für das Emtegut auf der Erntegutfördereinrichtung 9 ergibt. Die Steuerung der Schwingungseinheiten 14 kann aufgrund der Auswertung der Arbeitsergebnisse 46 notwendig werden. Die Arbeitsergebnisse 46 der einzelnen Vorrichtungen des Mähdreschers 2 werden in an sich bekannte Weise ermittelt und im Anzeigefeld 47 des Monitors 48 dargestellt Die Ermittlung des Arbeitsergebnisses 46 der Erntegutfördereinrichtung 9 erfolgt durch die an den Böden 11, 19 und den Sieben 21, 22 angeordneten Verlustmesseinrichtungen 49. Die Verlustmesseinrichtungen 49 beinhalten die bekannten Sensoren 50. Beispielsweise werden die von dem Förderbodensensor 55, dem Rücklaufbodensensor 56, dem Obersiebsensor 57, dem Untersiebsensor 58, sowie dem Überkehr 59- und Ertragssensor 60 ermittelten Daten der in der Steuereinrichtung 44 enthaltenen Speichereinheit 51 zur Verrechnung mit den abgespeicherten Daten zur Verfügung gestellt. Die so ermittelten Veriustwerte 53 werden in einer Verlustanzeige 52 des Monitors 48 optisch dargestellt. Weicht ein ermitteltes Ergebnis von dem voreingestellten Verlustwert 53 ab, erfolgt automatisch durch die Steuereinheit 44 eine Nachregelung der Schwingungseinheiten 14 durch Steuerung der Frequenz F und/oder des Hubes H. An dieser Stelle kann der Bediener des Mähdreschers 2 mittels eines Bedienfoldes 54 manuell die Einstellparameter der Frequenz F und/oder des Hubes H der Förderbodenschwingungseinheit 61, der Rücklaufbodenschwingungseinheit 62, der Obersiebschwingungseinheit 63 und der Untersiebschwingungseinheit 64 über die Steuereinrichtung 44 verändern- Mit diesem erfindungsgemäßen Antriebssystem steht dem Bediener ein Mittel zur Verfügung welches ihm ermöglicht die einzelnen Vorrichtungen 10,18 der Erntegutf6rdereinrichtung, wie etwa die Erntegutfördereinrichtung 9 und/oder die Rücklauf- und Vorbereitungsböden 10, 18 individuell zu steuern und somit den Erntebedingungen optimal anzupassen.

Es liegt im Rahmen des Könnens eines Fachmannes die beschriebenen Ausführungsbeispiele in nicht dargestellter Weise abzuwandeln oder in anderen Maschinensystemen einzusetzen, um die beschriebenen Effekte zu erzielen, ohne dabei den Rahmen der Erfindung zu verlassen.

### Bezugszeichenliste:

- 1: Selbstfahrende Landmaschine
- 2: Mähdrescher
- 3: Feldfläche
- 4: Schneidwerk
- 5: Förderer
- 6: Drescheinrichtung
- 7: Drescheinrichtung
- 8: Dreschkorb
- 9: Emtegutfördereinrichtung
- 10: Fördervorrichtung
- 11: Förderboden
- 12: Federn
- 13: Maschinengehäuse
- 14: Schwingungseinheit
- 15: elastische Elemente'
- 16: Schüftler
- 17: hinteres Ende
- 18: Rücklaufbodenvorrichtung
- 19: Rücklaufboden
- 20: Reinigungsvorrichtung
- 21: Obersieb
- 22: Untersieb
- 23:
- 24: Reinigungsgebläse
- 25:
- 26: Fallstufe
- 27: Obersiebweite
- 28: Fallstufe
- 29: Überkehr
- 30: Zuführschnecke
- 31: Kornelevator
- 32: Komtank
- 33: Zuführschnecke
- 34: Überkehrelevator
- 35: Wirbelstrombremse
- 36: Spule
- 37: Eisenkern
- 38: Magnet
- 39: Oberfläche
- 40: Längsseite
- 41: Querseite
- 42: Linearmotor
- 43: Linearführung
- 44: Steuereinrichtung
- 45:
- 46:
- 47:
- 48: Monitor
- 49: Verlustmesseinrichtungen
- 50: Sensoren
- 51: Speichereinheit
- 52: Verlustanzeige
- 53: Verlustwert
- 54: Bedienfeld
- 55: Förderbodensensor
- 56: Rücklaufbodensensor
- 57: Obersiebsensor
- 58: Untersiebsensor
- 59: Überkehrsensor
- 60: Ertragssensor
- 61: Förderbodenschwingungseinheit
- 62: Rücklaufbodenschwingungseinheit
- 63: Obersiebschwingungseinheit
- 63: Untersiebschwingungseinheit
- H: Hub
- F: Frequenz
- X: Raumkoordinaten
- Y: Raumkoordinaten
- Z: Raumkoordinaten

## Patentansprüche

1. Verfahren zum Antreiben einer Emtegutfördereinrichtung (9), die im wesentlichen aus mindestens einem Boden (11) und zumindest einem Sieb (21), wobei der Boden (11) und das Sieb (21) im Maschinengehäuse (13) pendelnd aufgehängt sind und wenigstens einer schwingungserzeugenden Antriebseinheit (14) besteht, **dadurch gekennzeichnet,**
**dass** die Antriebseinheit (14) aus einer linear oszillierenden Schwingungseinheit (14) gebildet und über eine Frequenz- und/oder Hubänderung gesteuert wird.

2. Verfahren nach Anspruch 1,
**dadurch gekennzeichnet,**
**dass** die Steuerung der Frequenz (F) der linear oszillierenden Schwingungseinheit (14) eine Änderung der Schwingung der Erntegutfördereinrichtung (9) und somit eine Änderung der Gleit- und Wurfphase des Gutes bewirkt.

3. Verfahren nach Anspruch 1,
**dadurch gekennzeichnet,**
**dass** die Steuerung des Hubes (H) der linear oszillierenden Schwingungseinheit (14) eine Änderung der Schwingung der Emtegutfördereinrichtung (9) und somit eine Änderung der Gleit- und Wurfphase des Gutes bewirkt.

4. Verfahren nach einem der vorhergehenden Ansprüche,
**dadurch gekennzeichnet,**
**dass** die Schwingungseinheit (14) senkrecht zur Oberfläche (39) der Emtegutfördereinrichtung (9) angeordnet ist

5. Verfahren nach einem der vorhergehenden Ansprüche,
**dadurch gekennzeichnet,**
**dass** die Steuerung der Frequenz (F) und/oder des Hubes (H) der linear oszillierenden Schwingungseinheit (14), durch Auswertung der Verlustwerte (53), automatisch durch eine Steuereinrichtung (44) erfolgt.

6. Verfahren nach einem der vorhergehenden Ansprüche,
**dadurch gekennzeichnet,**
**dass** die Steuerung der Frequenz (F) und/oder des Hubes (H) der linear oszillierenden Schwingungseinheit (14), durch Auswertung der Verlustwerte (53), manuell durch den Bediener am Bedienfeld (54) erfolgt

7. Emtegutfördereinrichtung (9) für selbstfahrende Landmaschinen (1), die im wesentlichen aus mindestens einem Boden (11) und zumindest einem Sieb (21), wobei der Boden (11) und das Sieb (21) im Maschinengehäuse (13) pendelnd aufgehängt sind, und wenigstens einer schwingungserzeugenden Antriebseinheit (14) besteht und Vorrichtung zum Antreiben der Erntegutfördereinrichtung (9),
**dadurch gekennzeichnet,**
**dass** die Antriebseinheit (14) aus einer linear oszillierenden Schwingungseinheit (14) gebildet wird, wobei mindestens eine linear oszillierende Schwingungseinheit (14) einem frei schwingenden Boden (11, 19) und/oder einem frei schwingenden Sieb (21, 22) zugeordnet ist und über eine Frequenz- und/oder Hubänderung gesteuert wird.

8. Vorrichtung nach Anspruch 7.
**dadurch gekennzeichnet,**
**dass** die linear oszillierende Schwingungseinheit (14) aus einer Spule (36) mit einem Eisenkern (37) und einem Magnet (38) gebildet ist.

9. Vorrichtung nach einem der Ansprüche 7 bis 8,
**dadurch gekennzeichnet,**
**dass** die Spule (36) und der Eisenkern (37) am Maschinengehäuse (13) und der Magnet (38) am Boden (11, 19) und/oder am Sieb (21, 22) angeordnet ist.

10. Vorrichtung nach einem der Ansprüche 7 bis 9,
**dadurch gekennzeichnet,**
**dass** die Spule (36) und der Eisenkern (37) am Boden (11, 19) und/oder am Sieb (21, 22) und der Magnet (38) am Maschinengehäuse (13) angeordnet ist

11. Vorrichtung nach einem der Ansprüche 7 bis 10.
**dadurch gekennzeichnet,**
**dass** die linear oszillierende Schwingungseinheit (14) den an elastischen Elementen (15) aufgehängten Boden (11, 19) und/oder das Sieb (21, 22) in zumindest einer Bewegungsrichtung in Schwingung versetzt.

12. Vorrichtung nach einem der Ansprüche 7 bis 11,
**dadurch gekennzeichnet,**
**dass** die Schwingung des Bodens (11, 19) und/oder des Siebes (21, 22) in X-,Y- und Z- Richtung erfolgt.

13. Vorrichtung nach einem der Ansprüche 7 bis 12,
**dadurch gekennzeichnet,**
**dass** mehrere linear oszillierende Schwingungseinheiten (14) dem Boden (11, 19) und/oder dem Sieb (21, 22) zugeordnet sind.

14. Vorrichtung nach Anspruch 7 bis 13,
**dadurch gekennzeichnet,**
**dass** durch die Anordnung mehrerer linear oszillierender Schwingungseinheiten (14) am Boden (11, 19) und/oder am Sieb (21, 22) das Erntegut jede vorbestimmte Bewegungsrichtung auf dem Boden (11,19) und/oder Sieb (21, 22) einnehmen kann.

15. Vorrichtung nach einem der vorhergehenden Anspruche,
**dadurch gekennzeichnet,**
**dass** die linear oszillierenden Schwingungseinheiten (14) parallel zur Oberfläche (39) des Bodens (11, 19) und/oder des Siebes (21, 22) angeordnet sind.

16. Vorrichtung nach einem der vorhergehenden Ansprüche,
**dadurch gekennzeichnet,**
**dass** die linear oszillierenden Schwingungseinheiten (14) senkrecht zur Oberfläche (39) des Bodens (11, 19) und/oder des Siebes (21, 22) angeordnet sind.

17. Vorrichtung nach einem der vorhergehenden Ansprüche,
**dadurch gekennzeichnet,**
**dass** der linear oszillierende Schwingungsantrieb (14) einzeln oder paarweise und/oder unter einem Winkel zur Oberfläche (39) des Bodens (11, 19) und/oder des Siebes (21, 22) angeordnet ist

18. Vorrichtung nach Anspruch 18,
**dadurch gekennzeichnet,**
**dass** die linear oszillierende Schwingungseinheit (14) als Linearmotor (42) mit einer Linearführung (43) ausgebildet ist.

19. Vorrichtung nach Anspruch 18 bis 19,
**dadurch gekennzeichnet,**
**dass** der linear oszillierende Schwingungsantrieb (14) mit dem Boden (11, 19) und/oder dem Sieb (21, 22) als elastische Aufhängung dient.

20. Vorrichtung nach Anspruch 18 bis 20,
**dadurch gekennzeichnet,**
**dass** der linear oszillierenden Schwingungsantrieb (14) die Neigung des Bodens (11, 19) und/oder des Siebes (21, 22) die beim Hangdrusch mit dem Mähdrescher entsteht, ausgleicht.

21. Vorrichtung nach Anspruch 7, **dadurch gekennzeichnet,**
**dass** die Erntegutfördereinrichtung (9) eine Reinigungsvorrichtung (20) aufweist.

22. Vorrichtung nach Anspruch 7,
**dadurch gekennzeichnet,**
**dass** die Emtegutfördereinrichtung (9) einen Rücklaufboden (19) und einen Vorbereitungsboden (11) aufweist.

## Claims

1. Method for driving an apparatus for conveying crop (9), said apparatus consisting of substantially at least one floor (11) and at least one sieve (21), where the floor (11) and the sieve (21) are suspended in the machine house (13) so as to swing back and forth, and at least one swing actuating drive unit (14), **characterised in that** the drive unit (14) is formed by a linear oscillating swing unit (14) and is controlled by a change of frequency and/or stroke.

2. Method according to claim 1, **characterised in that** the controlling of the frequency (F) of the linear oscillating swing unit (14) causes a change of the oscillation of the crop conveying apparatus (9) and thereby a change of the glide and throw phase of the crop.

3. Method according to claim 1, **characterised in that** the controlling of the stroke (H) of the linear oscillating swing unit (14) causes a change of the swinging of the crop conveying apparatus (9) and thereby a change of the glide and throw phase of the crop.

4. Method according to one of the preceding claims, **characterised in that** the swing unit (14) is mounted vertically to the surface (39) of the crop conveying apparatus (9).

5. Method according to one of the preceding claims, **characterised in that** by utilisation of the loss values (53), the controlling of the frequency (F) and/or the stroke (H) of the linear oscillating swing unit (14) takes place automatically by means of a control device (44).

6. Method according to one of the preceding claims, **characterised in that** by utilisation of the loss values (53), the controlling of the frequency (F) and/or the stroke (H) of the linear oscillating swing unit (14) takes place manually by the operator at the control panel (54).

7. Apparatus for conveying crop (9) for self-propelled agricultural machines (1), consisting of substantially at least one floor (11) and at least one sieve (21), where the floor (11) and the sieve (21) are suspended in the machine house (13) so as to swing back and forth, and at least one oscillation actuating drive unit (14) and a device for driving the conveying crop apparatus (9), **characterised in that** the drive unit (14) is formed by a linear oscillating swing unit (14), where at least one linear oscillating swing unit (14) is allocated to one freely swinging floor (11, 19) and/or one freely swinging sieve (21, 22) and is controlled by a change of frequency and/or stroke.

8. Apparatus according to claim 7, **characterised in that** the linear oscillating swing unit (14) is formed by a coil (36) with an iron core (37) and a magnet (38).

9. Apparatus according to claim 7 or 8, **characterised in that** the coil (36) and the iron core (37) are mounted on the machine house (13) and **in that** the magnet (38) is mounted on the floor (11, 19) and/or the sieve (21, 22).

10. Apparatus according to one of the claims 7 to 9, **characterised in that** the coil (36) and the iron core (37) are mounted on the floor (11, 19) and/or the sieve (21, 22) and **in that** the magnet (38) is mounted on the machine house (13).

11. Apparatus according to one of the claims 7 to 10, **characterised in that** the linear oscillating swing unit (14) effects swinging of the floor (11, 19), which is suspended in elastic means (15), and/or the sieve (21, 22) in at least one direction of motion.

12. Apparatus according to one of the claims 7 to 11, **characterised in that** the swinging of the floor (11, 19) and/or the sieve (21, 22) takes place in X, Y and Z direction.

13. Apparatus according to one of the claims 7 to 12, **characterised in that** several linear oscillating swing units (14) are associated to the floor (11, 19) and/or the sieve (21, 22).

14. Apparatus according to claim 7 to 13, **characterised in that** due to the association of several linear oscillating swing units (14) to the floor (11, 19) and/or the sieve (21, 22) the crop can take any predetermined direction of motion on the floor (11, 19) and/or the sieve (21, 22).

15. Apparatus according to one of the preceding claims, **characterised in that** the linear oscillating swing units (14) are associated parallel to the surface (39) of the floor (11, 19) and/or the sieve (21, 22).

16. Apparatus according to one of the preceding claims, **characterised in that** the linear oscillating swing units (14) are associated vertically to the surface (39) of the floor (11, 19) and/or the sieve (21, 22).

17. Apparatus according to one of the preceding claims, **characterised in that** the linear oscillating swing unit (14) is associated individually or in pairs and/or in an angle to the surface (39) of the floor (11, 19) and/or the sieve (21, 22).

18. Apparatus according to claim 17, **characterised in that** the linear oscillating swing unit (14) is formed as linear motor (42) with a linear guide (43).

19. Apparatus according to claim 17 to 19, **characterised in that** the linear oscillating swing unit (14) serves as elastic suspension with the floor (11, 19) and/or the sieve (21, 22).

20. Apparatus according to claim 17 to 20, **characterised in that** the linear oscillating swing unit (14) equalises the sloping of the floor (11 ,19) and/or the sieve (21, 22), which occurs by slope threshing with the combine harvester.

21. Apparatus according to claim 7, **characterised in that** the conveying crop apparatus (9) comprises a cleaning device (20).

22. Apparatus according to claim 7, **characterised in that** the conveying crop apparatus (9) comprises a return floor (19) and a preparation floor (11).

## Revendications

1. Procédé d'entraînement d'un dispositif pour convoyer des récoltes (9) qui se compose essentiellement d'au moins un fond (11) et d'au moins un tamis (21), le fond (11) et le tamis (21) étant suspendus de manière flottante dans le carter de la machine (13), et d'au moins une unité d'entraînement (14) générant des oscillations, **caractérisé en ce que** l'unité d'entraînement (14) est constituée d'une unité d'oscillation (14) oscillant linéairement et est commandée par le biais d'une modification de fréquence et/ou de course.

2. Procédé selon la revendication 1, **caractérisé en ce que** la commande de la fréquence (F) de l'unité d'oscillation (14) oscillant linéairement provoque une modification de l'oscillation du dispositif pour convoyer des récoltes (9) et ainsi une modification de la phase de glissement et de projection de la récolte.

3. Procédé selon la revendication 1, **caractérisé en ce que** la commande de la course (H) de l'unité d'oscillation (14) oscillant linéairement provoque une modification de l'oscillation du dispositif pour convoyer des récoltes (9) et ainsi une modification de la phase de glissement et de projection de la récolte.

4. Procédé selon l'une quelconque des revendications précédentes, **caractérisé en ce que** l'unité d'oscillation (14) est disposée perpendiculairement à la surface (39) du dispositif pour convoyer les récoltes (9).

5. Procédé selon l'une quelconque des revendications précédentes, **caractérisé en ce que** la commande de la fréquence (F) et/ou de la course (H) de l'unité d'oscillation (14) oscillant linéairement est effectuée en évaluant les valeurs de perte (53) automatiquement par un dispositif de commande (44).

6. Procédé selon l'une quelconque des revendications précédentes, **caractérisé en ce que** la commande de la fréquence (F) et/ou de la course (H) de l'unité d'oscillation (14) oscillant linéairement est effectuée en évaluant les valeurs de perte (53) manuellement par l'opérateur sur le panneau de commande (54).

7. Dispositif pour convoyer des récoltes (9) pour des machines agricoles (1) autotractées qui se compose essentiellement d'au moins un fond (11) et d'au moins un tamis (21), le fond (11) et le tamis (21) étant suspendus de manière flottante dans le carter de la machine (13), et d'au moins une unité d'entraînement (14) générant des oscillations et dispositif d'entraînement du dispositif pour convoyer des récoltes, **caractérisé en ce que** l'unité d'entraînement (14) est constituée d'une unité d'oscillation (14) oscillant linéairement, au moins une unité d'oscillation (14) oscillant linéairement étant associée à un fond (11, 19) oscillant librement et/ou à un tamis (21, 22) oscillant librement et étant commandée par le biais d'une modification de fréquence et/ou de course.

8. Dispositif selon la revendication 7, **caractérisé en ce que** l'unité d'oscillation (14) oscillant librement est constituée d'une bobine (36) avec un noyau de fer (37) et d'un aimant (38).

9. Dispositif selon l'une quelconque des revendications 7 à 8, **caractérisé en ce que** la bobine (36) et le noyau de fer (37) sont disposés sur le carter de la machine (13) et l'aimant (38) sur le fond (11, 19) et/ou sur le tamis (21, 22).

10. Dispositif selon l'une quelconque des revendications 7 à 9, **caractérisé en ce que** la bobine (36) et le noyau de fer (37) sont disposés sur le fond (11, 19) et/ou sur le tamis (21, 22) et l'aimant (38) sur le carter de la machine (13).

11. Dispositif selon l'une quelconque des revendications 7 à 10, **caractérisé en ce que** l'unité d'oscillation (14) oscillant linéairement fait osciller le fond (11, 19) suspendu sur des éléments (15) élastiques et/ou le tamis (21, 22) dans au moins un sens de déplacement.

12. Dispositif selon l'une quelconque des revendications 7 à 11, **caractérisé en ce que** l'oscillation du fond (11, 19) et/ou du tamis (21, 22) est effectuée dans la direction X, Y et Z.

13. Dispositif selon l'une quelconque des revendications 7 à 12, **caractérisé en ce que** plusieurs unités d'oscillation (14) oscillant linéairement sont associées au fond (11, 19) et/ou au tamis (21, 22).

14. Dispositif selon la revendication 7 à 13, **caractérisé en ce que** par la disposition de plusieurs unités d'oscillation (14) oscillant librement sur le fond (11, 19) et/ou sur le tamis (21, 22), la récolte peut prendre tout sens de déplacement prédéterminé sur le fond (11, 19) et/ou sur le tamis (21, 22).

15. Dispositif selon l'une quelconque des revendications précédentes, **caractérisé en ce que** les unités d'oscillation (14) oscillant linéairement sont disposées parallèlement à la surface (39) du fond (11, 19) et/ou du tamis (21, 22).

16. Dispositif selon l'une quelconque des revendications précédentes, **caractérisé en ce que** les unités d'oscillation (14) oscillant linéairement sont disposées perpendiculairement à la surface (39) du fond (11, 19) et/ou du tamis (21, 22).

17. Dispositif selon l'une quelconque des revendications précédentes, **caractérisé en ce que** l'entraînement d'oscillation (14) oscillant linéairement est disposé individuellement ou par paires et/ou selon un angle par rapport à la surface (39) du fond (11, 19) et/ou du tamis (21, 22).

18. Dispositif selon la revendication 18, **caractérisé en ce que** l'unité d'oscillation (14) oscillant linéairement est réalisée comme un moteur linéaire (42) avec un guidage linéaire (43).

19. Dispositif selon les revendications 18 à 19, **caractérisé en ce que** l'entraînement d'oscillation (14) oscillant linéairement avec le fond (11, 19) et/ou le tamis (21, 22) sert de suspension élastique.

20. Dispositif selon les revendications 18 à 20, **caractérisé en ce que** l'entraînement d'oscillation (14) oscillant linéairement compense l'inclinaison du fond (11, 19) et/ou du tamis (21, 22), qui apparaît lors du battage de versant avec la moissonneuse-batteuse.

21. Dispositif selon la revendication 7, **caractérisé en ce que** le dispositif pour convoyer les récoltes (9) présente un dispositif de nettoyage (20).

22. Dispositif selon la revendication 7, **caractérisé en ce que** le dispositif pour convoyer les récoltes (9) présente un fond de retour (19) et un fond de préparation (11).
